## Europäisches Patentamt
## European Patent Office
## Office européen des brevets

(11) Publication number: **0 049 826**
**B1**

# EUROPEAN PATENT SPECIFICATION

(45) Date of publication of patent specification: **21.08.85**

(21) Application number: **81107811.2**

(22) Date of filing: **01.10.81**

(51) Int. Cl.⁴: **B 65 G 67/08, B 65 G 1/04, B 63 B 25/02, B 65 G 41/00, B 65 G 57/112**

(54) **Load storage station, particularly for the stowing of ships.**

(30) Priority: **10.10.80 IT 2903180 U**

(43) Date of publication of application:
**21.04.82 Bulletin 82/16**

(45) Publication of the grant of the patent:
**21.08.85 Bulletin 85/34**

(84) Designated Contracting States:
**DE FR GB**

(56) References cited:
**AT-B- 297 583
DE-A-2 012 552
DE-B-1 204 141
DE-U-1 848 585
FR-A-1 246 342
GB-A- 770 438
US-A-1 423 878
US-A-1 923 836
US-A-2 033 234
US-A-3 140 770**

(73) Proprietor: **BM di Bevini & C. S.n.c.
Via L. Da Vinci
I-41015 Nonantola (IT)**

(72) Inventor: **Reggiani, Franco
Via Banchieri, 53
I-41100 Modena (IT)**

(74) Representative: **Modiano, Guido et al
MODIANO & ASSOCIATI S.A.S. Via Meravigli, 16
I-20123 Milan (IT)**

Courier Press, Leamington Spa, England.

## Description

This invention relates to a load storage apparatus, particularly for the stowing of ships, intended for operation inside a storehouse or ship hold to transfer individual load component elements from a confined area where said elements are piled to an area where said elements are arranged in an orderly fashion.

For such load or cargo handling operations, it is general practice to utilize self-propelled lift trucks which, however, cannot perform efficiently in confined spaces, such as a ship hold, since the available space for stowing is practically the space which surrounds the loading area below the deck hatch. Moreover, where the load or cargo comprises bags, bales, or the like, these must be arranged in an orderly fashion to form several layers starting from the remotest areas from the loading one.

AT—B—297583 discloses a load storage apparatus as defined in the precharacterizing clause of appended claim 1.

Heretofore, the handling of a load or cargo for storage/stowage purposes required the availability of a considerable labor force capable of carrying out heavy work for a long time.

Accordingly, the problem of this invention attempts to solve is to provide a load storage apparatus, in particular for ship stowing, which while being manned and while having a large reach of action and while affording the possibility of rationalizing and speeding up the load/cargo handling operations, and drastically reducing the labor requirements, makes it possible that the overall dimensions in the extended condition of the apparatus can be reduced to a selected size in the retracted condition of the apparatus to facilitate its introduction into spaces of complicated accessibility such as the passage through a deck hatch of a ship for the introduction into a ship's hold.

The aforesaid task and object are achieved by a load storage apparatus, particularly for the stowing of ships as defined in the characterising clause of claim 1.

The features of the invention will be more apparent from the following detailed description of a preferred, but not limitative, embodiment of a load storage apparatus, particularly for the stowing of ships, according to the invention, as illustrated by way of example and not of limitation in the accompanying drawings, where:

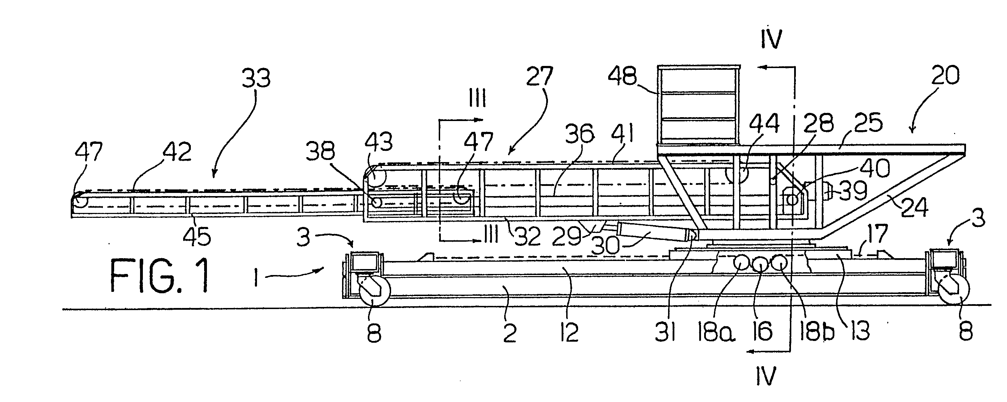

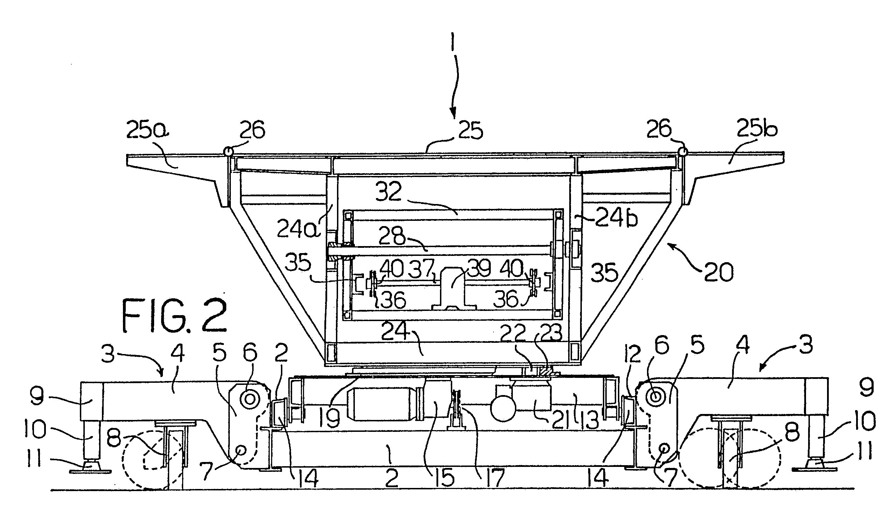

Figures 1 and 2 are respectively a side view and a rear view of a storage apparatus; and

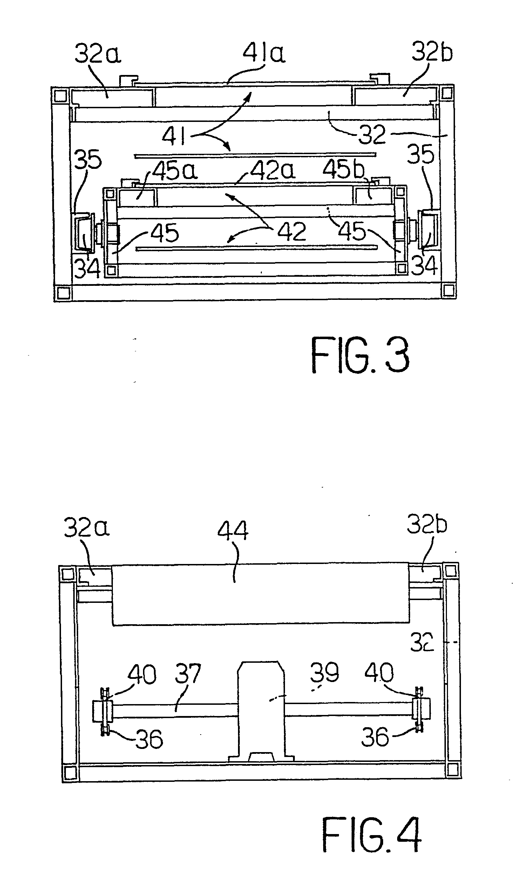

Figures 3 and 4 are detail views taken along the section planes III—III and IV—IV of Figure 1.

With particular reference to the drawing figures, a storage station is indicated at 1. The apparatus 1 comprises a rectangular platform 2 which, by means of ground engaging elements 3, is handled and arranged essentially horizontal in a desired work position inside a storehouse or ship hold. The elements 3 comprise four brackets 4 which protrude laterally out of the front and rear ends of the platform 2. Each bracket 4 is secured to a respective support bracket 5, made rigid with the platform 3, by means of a longitudinal hinge 6 and of a peg 7 which is removably inserted longitudinally through respective holes formed in the bracket 4 and support bracket 5 below the hinge 6.

In the proximities of the hinge 6, each bracket 4 carries at the bottom a wheel 8 journaled for idle rotation relatively to a vertical axis; the bracket 4 is provided at its free end with a bushing 9 wherein a retractable column 10 is guided vertically which carries at the bottom, articulated in a ball pin, a foot 11 for ground resting. Preferably, on the bushing 9 interior, there is formed a volute screw which is coupled to the threaded end of said corresponding column 10.

The platform 2 carries at the top a pair of longitudinal guides 12 along which a carriage 13 is driven in sliding engagement, the carriage having idle mounted wheels 14.

A geared motor 15 is secured under the carriage 13 and drives a sprocket wheel 16 which engages with the links of a chain 17 extending longitudinally and being fastened to the ends of the platform 2.

A pair of idler sprockets 18a and 18b are arranged co-planarly, respectively upstream and downstream of the sprocket 16, to keep the length of chain 17 in engagement with the spocket 16 tensioned.

The carriage 13 carries, rotatable by means of a center plate 19, a parking stage 20 for the load. A geared motor 21 drives a pinion gear 22 which mesh engages with a gear wheel 23 internally rigid with the center plate 19.

The stage 20 comprises a frame 24 formed from sectional metal, which defines at the top a working surface 25 which carries hinged longitudinally, by hinges 26, two side extensions 25a and 25b arranged to be coplanar with the surface or deck 25 so as to increase the useful area thereof.

To the stage 20, there is hingedly connected a first arm 27, set for oscillation in a vertical plane, which has one end journaled to a horizontal cross pin 28, located below the deck 25 between two uprights 24a and 24b of the frame 24.

Substantially at its middle, the arm 27 carries hinged (hinge 29) to its bottom the rod of a jack 30 which is in turn hingedly connected to the base of the frame 24 through a hinge 31. The arm 27 comprises a frame 32 of rectangular cross-section, wherein a second arm 33 is guided telescopically which has side mounted idle wheels 34 accommodated in oppositely located C-like longitudinal guides 35 of the arm 27.

The arm 33 is made rigid with a pair of chains 36 in closed loop configuration and stretched between a driveshaft 37 and an idler return shaft 38, located respectively at the journaled end and free end of the arm 27. The reference numeral 39 designates the geared motor which, through the shaft 37, drives a pair of sprocket wheels 40 engaging with the chains 36.

The arm 27 and arm 33 are equipped with respective conveyor belts 41 and 42 which are driven in a conventional way and form the conveyor. At 43 and 44, there are indicated the return rollers of the belt 41, the forward run 41a whereof is guided laterally on a pair of longitudinal stringers 32a and 32b of the frame 32. The belt 42 is similarly arranged on the arm 33.

At 45 there is indicated the frame of the arm 33 and at 45a and 45b its related stringers on which the forward run of the belt 42 is guided. The belt 42 is stretched between the return rollers 46 and 47. At 48 is indicated a protection breastwork arranged laterally to a recessed portion of the deck 25, wherethrough the arm 27 extends in the position of maximum inclination on the stage 20.

The invention operates as follows: the apparatus 1 is made ready at a loading location where the load can be readily laid onto the deck 25 of the parking stage 20.

The platform 2 rests on the ground through the feet 11, and the arm 27 is directed toward the storage area selected by operating the geared motor 21, which will produce a rotation of the arm 27 relatively to the longitudinal axis of the platform 2. By actuating the jack 30, the inclination of the arm 27 is adjusted on the horizontal plane whilst, by means of the geared motor 39 and chain 36, the arm 33 can be extended telescopically with respect to the arm 27, thereby the conveyor belts 41 and 42 provide a line of conveyance of the load to the storage area. In order to increase the reach of said line of conveyance, the carriage 13 can be displaced longitudinally with respect to the platform 2 by operating the geared motor 15.

Upon completion of the storing/stowing operations, and after the columns 10 have been retracted into the bushings 9, the apparatus 1 can be easily transferred to a successive loading location by resting it on the ground via castor wheels 8.

Finally, after the storing/stowing operations have been completed, the apparatus 1 can be easily moved away from the loading location, since by tilting the brackets 4 and side extensions 25a and 25b upwards and by arranging the arm 33 in its fully retracted position within the arm 27, the overall size of the apparatus 1 reduces to the size of the platform 2.

It has been found in actual practice that the invention achieves its objects; in particular, few oeprators are sufficient to quickly carry out the storing/stowing of a considerable load, since the work can go in a continuous way. The load parking stage 20, on which two operators will be at work to arrange the load onto the conveyor belt 41, is fed, upon occasion, from a crane or other suitable means, and, as the load is being transferred to the storage area, the apparatus 1 can be operated to convey the load to other available storage areas.

## Claims

1. A load storage apparatus, particularly for the stowing of ships, including a platform (2) with ground resting elements (3), a carriage (13) driven along longitudinal runways (12), an extendable load conveyor assembly mounted on said carriage (13) for rotation about a vertical axis and for oscillation in a vertical plane for delivering said load to a desired storage location, characterized in that the apparatus further comprises a manned load parking stage (20) carried rotatably on said carriage (13) for rotation about said vertical axis and wherein said extendable load conveyor assembly (41, 42) is mounted on said load parking stage (20), said platform (2) having a selected longitudinal and a selected widthwise extension and wherein said carriage (13), said load parking stage (20) and said conveyor assembly (41, 42) in retracted condition thereof are confined within the layout area of said platform defined by said selected longitudinal and selected widthwise dimensions thereof.

2. An apparatus according to Claim 1, characterized in that said conveyor assembly (41) comprises a closed loop conveyor belt (41) passed around a pair of rollers (43, 44) carried rotatably at the end of an arm (27) articulated to the load parking stage (20).

3. An apparatus according to Claim 1 or 2, characterized in that said articulated arm (27) has one end journaled to a horizontal pivot pin (28) of said load parking stage (20), and that at a substantially central position (29) a jack (30) is active which is interposed between said arm (27) and said stage (20).

4. An apparatus according to any of Claims 1 to 3, characterized in that on said articulated arm (27) there is supported for a telescopic sliding movement a second arm (33) carrying a conveyor belt (42), and that a means (36) is provided of actuating said second arm (33) between a retracted position and an extended position with respect to said articulated arm (27).

5. An apparatus according to any one of Claims 1 to 4, characterized in that said means comprises a pair of closed loop chains (36) extending between a driveshaft (37) and an idler return shaft (38) respectively located at the pivoted end and free end of said oscillating arm (27), said chains (36) being connected to at least one point on said second arm (33).

6. An apparatus according to Claim 1, characterized in that said resting elements comprise four brackets (4) arranged to protrude laterally out of said platform (2), said brackets (4) being provided at the bottom with respective castor wheels (8) set for pivotal movement in vertical planes to allow the platform (2) to be transferred to a desired job site.

7. An apparatus according to Claim 1 or 6, characterized in that said brackets (4) are also provided with retractable columns (10) having at the bottom ends thereof respective ground engaging feet (11) articulated thereto through ball pins.

8. An apparatus according to Claim 1 or 6, characterized in that said brackets (4) are articulated at the top to said platform (2) by means of longitudinal hinges (6) and be tilted up to reduce the cross dimension to the size of said platform (2).

## Patentansprüche

1. Gerät zur Einlagerung von Lasten, insbesondere zum Stauen bei Schiffen, mit einer Plattform (2) mit Bodenabstützelementen (3), einem Fahrgestell (13), das entlang längsverlaufender Fahrbahnen (12) verfahrbar ist, und einer ausfahrbaren Lastförderanordnung, die auf dem Fahrgestell (13) um eine vertikale Achse drehbar und in einer vertikalen Ebene schwenkbar montiert ist, um die Last an einer gewünschten Einlagerungsstelle abzusetzen, dadurch gekennzeichnet, dass das Gerät weiters eine bemannte Lastabstellbühne (20) aufweist, die drehbar auf dem genannten Fahrgestell (13) zur Drehung um die genannte vertikale Achse montiert ist, wobei die ausfahrbare Lastförderanordnung (41, 42) an der Lastabstellbühne (20) montiert ist, die Plattform (2) eine bestimmte Längserstreckung und eine bestimmte Breitenerstreckung besitzt und das Fahrgestell (13), die Lastabstellbühne (20) und die Lastförderanordnung (41, 42) in der eingezogenen Stellung derselben innerhalb der Grundrissfläche der Plattform, gegeben durch die bestimmte Längsabmessung und die bestimmte Breitenabmessung derselben, liegen.

2. Gerät nach Anspruch 1, dadurch gekennzeichnet, dass die genannte Förderanordnung (41) aus einem in sich geschlossenen Förderband (41) besteht, das um ein Paar von Walzen (43, 44) geführt ist, die drehbar am Ende eines an der Lastabstellbühne (20) angelenkten Armes (27) gelagert sind.

3. Gerät nach Anspruch 1 oder 2, dadurch gekennzeichnet, dass ein Ende des genannten Anlenkarmes (27) an einem horizontalen Drehzapfen (28) der Lastabstellbühne (20) gelagert ist und dass an einer im wesentlichen zentralen Stelle (29) eine zwischen dem Arm (27) und der Bühne (20) eingesetzte Anhebevorrichtung (30) wirkt.

4. Gerät nach einem der Ansprüche 1 bis 3, dadurch gekennzeichnet, dass an dem genannten Anlenkarm (27) für eine teleskopartige Gleitbewegung ein zweiter, ein Förderband (42) tragender Arm (33) gelagert ist und Einrichtungen (36) zur Betätigung des zweiten Armes (33) zwischen einer eingezogenen Stellung und einer ausgefahreren Stellung, bezogen auf den Anlenkarm (27), vorgesehen sind.

5. Gerät nach einem der Ansprüche 1 bis 4, dadurch gekennzeichnet, dass die genannten Einrichtungen aus einem Paar von geschlossenen Ringketten (26) bestehen, die sich zwischen einer Antriebswelle (37) und einer losen Umlenkwelle (38) erstrecken, welche am Anlenkende bzw. am freien Ende das Schwenkarms (27) gelagert sind, wobei die Ketten (36) an wenigstens einer Stelle mit dem zweiten Arm (33) verbunden sind.

6. Gerät nach Anspruch 1, dadurch gekennzeichnet, dass die Abstützelement aus vier Kragarmen (4) bestehen, die seitlich von der Platform (2) wegstehen und am Boden jeweils mit Laufrollen (8) versehen sind, die in vertikalen Ebenen schwenkbar sind, damit die Plattform (2) zu einer gewünschten Arbeitsstelle verfahren werden kann.

7. Gerät nach Anspruch 1 oder 6, dadurch gekennzeichnet, dass die Kragarme (4) weiters mit einziehbaren Säulen (10) versehen sind, welche an den unteren Enden am Boden angreifende Aufsitzfüsse (11), die an ihnen mittels Kugelbolzen angelenkt sind, aufweisen.

8. Gerät nach Anspruch 1 oder 6, dadurch gekennzeichnet, dass die Kragarme (4) an der Oberseite der Plattform (2) mittels längsverlaufender Scharniere (6) angelenkt und zum Zwecke der Reduzierung der Querabmessung auf die Grösse der Plattform (2) aufklappbar sind.

## Revendications

1. Appareil d'entreposage de fret, notamment pour le chargement de bateaux, comportant une plate-forme (2) avec des éléments reposant sur le sol (3), un chariot (13) entraîné sur des chemins de roulement longitudinaux (12), un ensemble transporteur de charges extensible monté sur le chariot (13) et pouvant tourner autour d'un axe vertical et basculer dans un plan vertical pour amener la charge à un emplacement d'entreposage désiré, caractérisé en ce qu'il comporte en outre un poste de dépôt des charges (20) desservi par du personnel, porté sur le chariot (13) pour tourner autour de cet axe vertical, en ce que l'ensemble transporteur de charges extensible (41, 42) est monté sur ce poste de dépôt des charges (20), en ce que la plateforme (2) a une longueur et une largeur déterminées, et en ce que le chariot (13), le poste de dépôt des charges (20) et l'ensemble transporteur (41, 42) en position rétractée se trouvent à l'intérieur du contour en plan de la plate-forme défini par sa longueur et sa largeur déterminées.

2. Appareil selon la revendication 1, caractérisé en ce que l'ensemble transporteur (41) comporte une bande transporteuse en boucle fermée (41) qui passe autour de deux rouleaux (43, 44) portés à rotation à l'extrémité d'un bras (27) articulé sur le poste de dépôt des charges (20).

3. Appareil selon la revendication 1, caractérisé en ce que ce bras articulé (27) a une extrémité tourillonnant sur un axe de pivotement horizontal (28) du poste de dépôt des charges (20) et en ce qu'un vérin (20) interposé entre le bras (27) et le poste (20), agit sur une position pratiquement au centre du bras.

4. Appareil selon l'une quelconque des revendications 1 à 3, caractérisé en ce qu'un deuxième bras (33), portant une bande transporteuse (42) coulisse télescopiquement sur le bras articulé (27) et en ce qu'li est prévu des moyens (36) pour déplacer de deuxième bras (33) par rapport au bras articulé (27) entre une position rétractée et une position sortie.

5. Appareil selon l'une quelconque des revendications 1 à 4, caractérisé en ce que ces moyens comportent deux chaînes en boucle fermée (36) s'étandant entre un arbre de commande (37) et un arbre de retour (38) tournant fou, disposés respectivement à l'extrémité pivotante et à l'extrémité libre du bras oscillant (27), ces chaînes (36) étant reliées à au moins un point sur le deuxième bras (33).

6. Appareil selon la revendication 1, caractérisé en ce que les éléments reposant sur le sol comportent quatre béquilles (4) agencées pour dépasser latéralement hors de la plate-forme (2), ces béquilles (4) étant équipées par en dessous de roues pivotantes respectives (8) montées de façon à pouvoir pivoter dans des plans verticaux pour permettre de transférer la plate-forme au site de travail désiré.

7. Appareil selon la revendication 1, ou la revendication 6, caractérisé en ce que les béquilles (4) sont également équipées de colonnes rétractables (10) dont les extrémités inférieures sont pourvues de patins (11) reposant sur le sol et qui leur sont articulés par un pivot à rotule sphérique.

8. Appareil selon la revendication 1 ou la revendication 6, caractérisé en ce que les béquilles (4) sont articulées en haut sur la plate-forme (2) autour d'articulations longitudinales (6) et peuvent être basculées vers le haut pour ramener la dimension transversale à la dimension de la plate-forme.

FIG. 1

FIG.2

FIG.3

FIG.4